# EUROPEAN PATENT SPECIFICATION

(11) **EP 4 067 116 B1**
(45) Date of publication and mention of the grant of the patent: **29.05.2024**
(21) Application number: 20892012.4
(22) Date of filing: 24.11.2020
(51) Int. Cl.: B60C 11/03, B60C 11/12, B60C 11/13

(54) **TIRE**
REIFEN
PNEUMATIQUE

(30) Priority: 29.11.2019 JP 2019216878
(43) Date of publication of application: 05.10.2022
(73) Proprietor: BRIDGESTONE CORPORATION, Chuo-ku Tokyo 104-8340 (JP)
(72) Inventor: ISHIHARA, Nobuyuki, Chuo-ku, Tokyo 104-8340 (JP)
(74) Representative: Marks & Clerk LLP
(86) International application number: PCT/JP2020/043545
(87) International publication number: WO 2021/106817

(56) References cited:
- EP-A1- 2 289 714
- WO-A1-2015/056573
- WO-A1-2019/087980
- JP-A- 2001 206 019
- JP-A- 2015 048 045
- JP-A- 2019 131 152
- JP-A- 2019 137 088
- JP-A- 2019 151 151

## Description

### [Technical Field]

The present invention relates to a tire suitable for traveling on an ice/snow road surface.

### [Background Art]

Conventionally, in a pneumatic tire (hereinafter, appropriately omitted as "tire") such as a studless tire suitable for traveling on an ice/snow road surface, various shapes have been adopted to enhance not only driving performance on an ice/snow road surface (hereinafter, called on-snow performance) but also rigidity of a land block in contact with the road surface, in order to achieve compatibility between steering stability and wear resistance particularly on a dry road surface.

For example, there is known a tread pattern in which a bar-like convex portion called a tie bar is provided in a width direction groove for connecting land blocks partitioned by width direction grooves (see Patent Literature 1). A concave portion concaved to a tire radial direction inside is formed on the upper surface (the outer surface of tire radial direction) of the convex portion.

According to such a tread pattern, the rigidity of the land block is increased, so that steering stability and wear resistance can be improved. Further, since it is possible to avoid a large reduction in the volume of the width direction groove due to the formation of the concave portion, it is said that the concave portion does not have a large influence on the on-snow performance. Attention is also drawn to the disclosures of JP2015-048045A, WO2019/087980A1 and EP2289714A1.

### [Citation List]

### [Patent Literature]

[Patent Literature 1]
Japanese Unexamined Patent Application Publication No. 2009 - 227154

### [Summary of Invention]

However, the above-described shape in which the land blocks are connected by the tie bars has the following problems.

Specifically, the presence of the convex portion lowers the pressure (edge pressure) of the end portion of the land block to the road surface in the tire circumferential direction. As a result, the on-snow traction is easily lowered.

That is, in order to improve the on-snow traction (and braking force; hereinafter the same), it is important to increase the edge pressure of the land block, especially the edge pressure at the circumferential end of the land block.

However, when the edge pressure is increased, the deformation of the land block becomes large, and it becomes easy to cause uneven wear, and it becomes difficult to secure wear resistance.

In addition, a technique for securing the on-snow traction by the characteristics of rubber used for land blocks is also known, but considering the recent demand for lower rolling resistance, it is assumed that there is a limit to securing the on-snow traction largely depending on the characteristics of rubber.

It is therefore an object of the present invention to provide a tire capable of achieving both on-snow performance and wear resistance performance at a higher level by means of a tread pattern.

The present invention provides a tire as claimed in claim 1.

### [Brief Description of Drawings]

FIG. 1 is a partial plan view of a tread of a pneumatic tire 10.
FIG. 2 is a partially enlarged plan view of a block row 30.
FIG. 3 is a partially enlarged plan view of the block row 30 and a block row 40 including an illustration of a circumferential section S.
FIG. 4 is a partially enlarged plan view of the block row 30 and the block row 40 including illustrations of extension angles θ1 and θ2.
FIG. 5 is a partially enlarged plan view of a width direction groove portion 310 side constituting a width direction groove 300.
FIG. 6 is a partially enlarged plan view of a width direction groove portion 320 side constituting the width direction groove 300.

### [Modes for Carrying out the Invention]

Embodiments will be described below with reference to the drawings. It should be noted that the same functions and configurations are denoted by the same or similar reference numerals, and the description thereof is appropriately omitted.

### (1) Overall schematic configuration of the tire

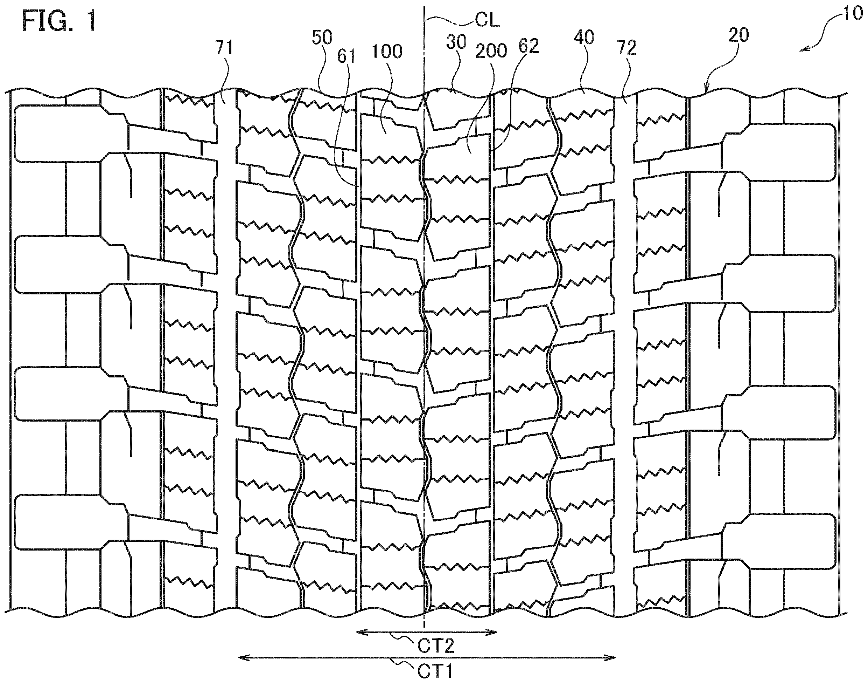

FIG. 1 is a partial plan view of a tread of a pneumatic tire 10 according to the present embodiment. As shown in FIG. 1, the pneumatic tire 10 has a tread 20 in contact with a road surface.

A tread pattern is formed on the tread 20 according to the required performance for the pneumatic tire 10. In this embodiment, the pneumatic tire 10 is a studless tire that can be suitably used for a truck and a bus (TB). The studless tire may be referred to as a snow tire or a winter tire. Alternatively, the pneumatic tire 10 may be a so-called all-season tire usable not only in winter but also in all seasons.

The pneumatic tire 10 is not necessarily used for a truck or a bus, but may be used for another type of vehicle, for example, a standard passenger car, a van or a light-duty truck.

The tread 20 is provided with a plurality of block rows extending in the tire circumferential direction. Specifically, the tread 20 is provided with a block row 30, a block row 40, and a block row 50.

The block row 30 is provided at a position including a tire equatorial line CL. The block row 30 is a block row delimited by the circumferential direction narrow grooves 61 and the circumferential direction narrow grooves 62. The block row 40 and the block row 50 are provided in the tire width direction outside of the block row 30.

A circumferential direction main groove 71 extending in the tire circumferential direction is formed in the tire width direction outside of the block row 40. Similarly, a circumferential direction main groove 72 extending in the tire circumferential direction is formed in the tire width direction outside of the block row 30. In this embodiment, the circumferential direction main groove 71 and the circumferential direction main groove 72 are straight. However, the circumferential direction main groove 71 and the circumferential direction main groove 72 may not necessarily be straight, such as curving to some extent in the tire width direction.

More specifically, the block row 30, the block row 40, and the block row 50 are provided in the central land region CT1. The central land region CT1 may be defined as a region defined by a pair of the circumferential direction main groove 71 and the circumferential direction main groove 72 extending in the tire circumferential direction.

The block row 30 is provided in a tread central region CT2. The tread central region CT2 may be more specifically defined as a region including the tire equatorial line CL. Further, the tread central region CT2 may be included in the central land region CT1 and defined as a region narrower than the central land region CT1.

In the present embodiment, no circumferential groove having a groove width appropriately equal to the groove width of the circumferential direction main groove 71 and the circumferential direction main groove 72 or wider than the groove width of the circumferential direction main groove 71 and the circumferential direction main groove 72 is formed in the central land region CT1. In this embodiment, the groove width of the circumferential direction main groove 71 and the circumferential direction main groove 72 are about 4.0 ~ 10.0 mm, and the groove width of the circumferential direction narrow groove 61 and the circumferential direction narrow groove 62 are about 1.5 ~ 4.0 mm.

That is, only the circumferential direction narrow grooves extending in the tire circumferential direction such as the circumferential direction narrow grooves 61 and the circumferential direction narrow grooves 62 are formed in the central land region CT1. Therefore, in the central land region CT1, the distance (may be called as spacing or void) between adjacent land blocks is narrow, and a plurality of land blocks are aggregated more than in a standard tire of this type.

The block row 30 may be provided with a plurality of land blocks 100 and land blocks 200 along the tire circumferential direction. More specifically, a plurality of land blocks 100 are provided along the tire circumferential direction on one side in the tire width direction with tire equatorial line CL as a reference. A plurality of land blocks 200 are provided along the tire circumferential direction on the other side (another side) in the tire width direction with tire equatorial line CL as a reference. As shown in FIG. 1, the land block 100 and the land block 200 have substantially the same shape. The land block 100 and the land block 200 may be point symmetric or line symmetric.

Although not shown with reference numerals, land blocks having substantially the same shape as the land blocks 100 and 200 may also be provided in the block rows 40 and 50. The rubber used for the land blocks constituting the tread 20, such as the land block 100 and the land block 200, is not particularly limited as long as an appropriate material is used in consideration of on snow performance and wear resistance.

However, a material contributing to the reduction of the rolling resistance (RR) of the pneumatic tire 10 may be used. Specifically, the rolling resistance coefficient (RRC) is preferably 7.5 or less.

### (2) Shape of block row 30

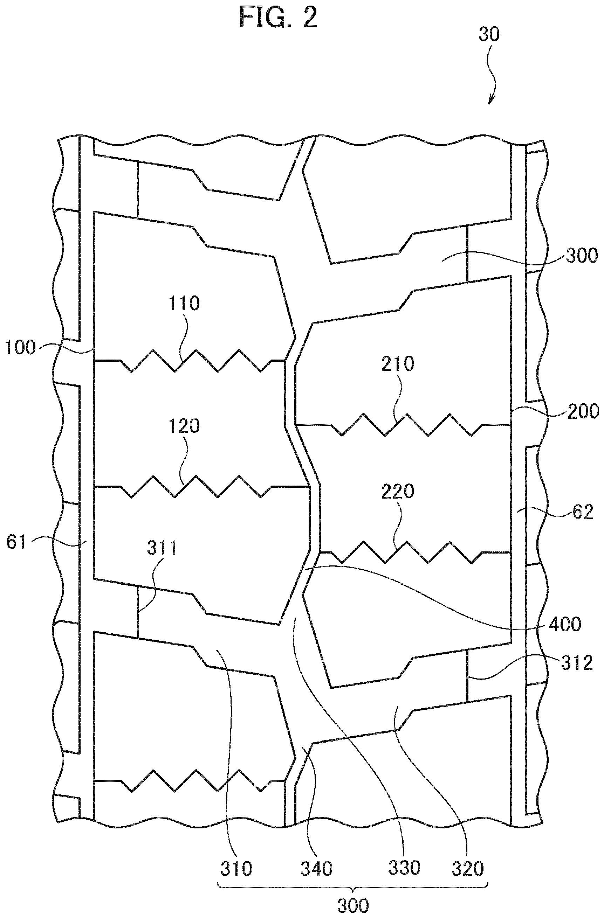

FIG. 2 is a partially enlarged plan view of the block row 30. As shown in FIG. 2, the block row 30 is delimited by the circumferential direction narrow groove 61 and the circumferential direction narrow groove 62 extending in the tire circumferential direction.

The block row 30 has a plurality of land blocks 100 and land blocks 200 delimited by width direction grooves 300 extending in the tire width direction. That is, in this embodiment, the block row 30 includes the land block 100 and the land block 200.

The width direction groove 300 is formed in the block row 30 and is positioned in the tread central region CT2 (see FIG. 1).

As described above, the circumferential direction narrow groove 61 and the circumferential direction narrow groove 62 have a smaller groove width than the circumferential direction main groove 71 and the circumferential direction main groove 72. In the present embodiment, the circumferential direction narrow groove 61 and the circumferential direction narrow groove 62 are straight. However, the circumferential direction narrow groove 61 and the circumferential direction narrow grooves 62 may not necessarily be straight, such as curving slightly in the tire width direction.

A plurality of sipes extending in the tire width direction are formed in the land block 100 and the land block 200.

Specifically, a sipe 110 and a sipe 120 are formed in the land block 100. A sipe 210 and a sipe 220 are formed in the land block 200. The sipe is a narrow groove that closes in the ground plane of the land block, and the opening width of the sipe when not grounded is generally about 0.1 mm to 1.5 mm, though not particularly limited.

An inter-block narrow groove 400 is formed between the land block 100 and the land block 200 in the tire width direction. The inter-block narrow groove 400 extends along the tire circumferential direction, but is not straight and curves in the tire width direction.

The width direction groove 300 delimits the adjacent land block 100 in the tire circumferential direction and delimits the adjacent land block 200 in the tire circumferential direction.

The width direction groove 300 has a width direction groove portion 310, a width direction groove portion 320, a bend portion 330 and a bend portion 340. That is, the width direction groove 300 may include a width direction groove portion and at least one bent portion which is continuous to the width direction groove portion and is bent in the tire circumferential direction.

The width direction groove 310 is a portion for delimiting the adjacent land block 100 in the tire circumferential direction. The width direction groove 320 is a portion for delimiting the adjacent land block 200 in the tire circumferential direction. The width direction groove portion 310 and the width direction groove portion 320 may be referred to as a lug groove portion or a lateral groove portion, and the width direction groove 300 may be referred to as a lug groove or a lateral groove.

The bent portion 330 communicates with the width direction groove portion 310 and the width direction groove portion 320 and is formed between the width direction groove portion 310 and the width direction groove portion 320. Similarly, the bent portion 340 communicates with the width direction groove portion 310 and the width direction groove portion 320 and is formed between the width direction groove portion 310 and the width direction groove portion 320.

The bent portion 330 is convex to one side in the tire circumferential direction, and the bent portion 340 is convex to the other side in the tire circumferential direction. The groove width of the bent portion 330 along the tire width direction becomes narrow along the tire circumferential direction, specifically, as it advances to one side in the tire circumferential direction. Similarly, the groove width of the bent portion 340 along the tire width direction becomes narrow along the tire circumferential direction, specifically, as it advances to the other side in the tire circumferential direction.

As described above, in the present embodiment, the bent portion 330 and the bent portion 340 are wedge-shaped. That is, the bent portions 330 and 340 may be rephrased as V-shaped, tapered, or the like.

In the present embodiment, the bent portion 330 and the bent portion 340 are formed in the central portion of the block row 30 in the tire width direction. The central portion may mean a predetermined range based on a position obtained by dividing the width of the block row 30 along the tire width direction by two. The predetermined range may be, for example, about 1/4 to 1/5 of the width of the block row 30.

Further, in the present embodiment, the width direction groove portion 310 continues to the circumferential direction narrow groove 61. The width direction groove portion 320 is continuous to the circumferential direction narrow groove 62. In the present embodiment, the position in the tire circumferential direction where the width direction groove portion 310 continues to the circumferential direction narrow groove 61 and the position in the tire circumferential direction where the width direction groove portion 320 continues to the circumferential direction narrow groove 62 are offset (that is, different).

In a portion closer to the circumferential direction narrow groove 61 than a stepped section 311 of the width direction groove portion 310, the groove depth is deeper than other portions including the bent portion 330 and the bent portion 340, and the groove depth is the same as the groove depth of the circumferential direction narrow groove 61. Similarly, in a portion closer to the circumferential direction narrow groove 62 than a stepped section 321 of the width direction groove portion 320, the groove depth is deeper than other portions including the bent portion 330 and the bent portion 340, and the groove depth is the same as that of the circumferential direction narrow groove 62. That is, the groove depth of the central portion including the bent portion 330 and the bent portion 340 of the width direction groove 300 is shallower than the groove depth of the circumferential direction narrow groove 61 and the circumferential direction narrow groove 62.

The bent portion 330 and the bent portion 340 communicate with the inter-block narrow groove 400. The inter-block narrow groove 400 also has the same groove depth as the bent portion 330 and the bent portion 340.

### (3) Relationship to adjacent block row

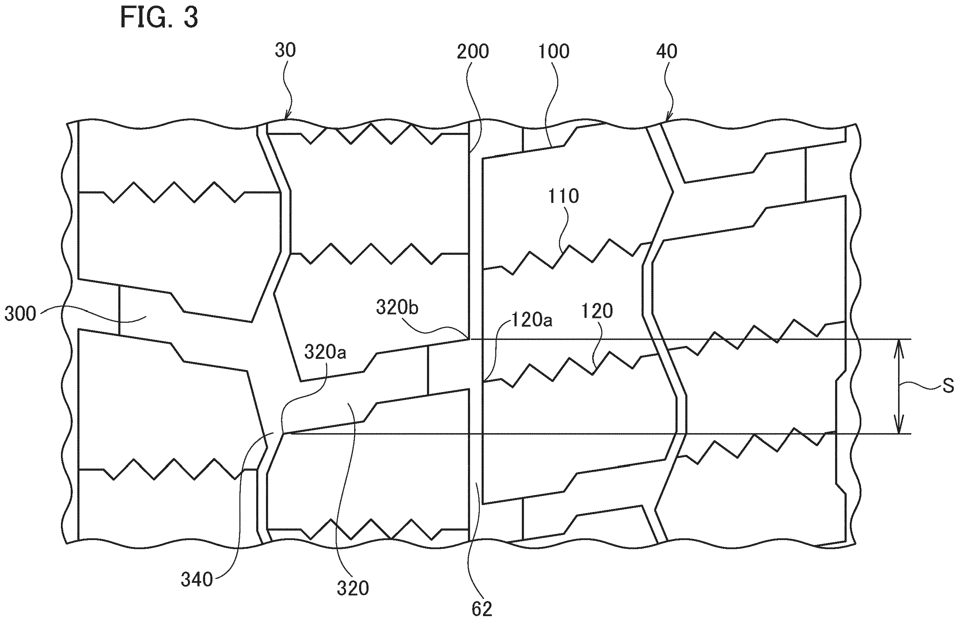

FIG. 3 is a partially enlarged plan view of the block row 30 and the block row 40 including the circumferential section S. As shown in FIG. 3, the block row 40 is adjacent to the block row 30. More specifically, the block row 40 is adjacent to the block row 30 in the tire width direction outside of the block row 30. In this embodiment, the block row 40 constitutes an adjacent block row.

More specifically, the land block 100 of the block row 40 is adjacent to the land block 200 of the block row 30. In this embodiment, the land block 100 of the block row 40 constitutes an adjacent land block.

That is, the block row 40 adjacent to the block row 30 in the tire width direction across the circumferential direction narrow groove 62 has a land block 100 formed with a sipe 120 extending in the tire width direction.

The sipe 120 formed in the land block 100 of the block row 40 is positioned between one end of the width direction groove portion 320 in the tire circumferential direction and the other end of the width direction groove in the tire circumferential direction.

Specifically, the sipe 120 formed in the land block 100 of the block row 40 is positioned between the circumferential direction end 320 a and the circumferential direction end 320 b, specifically within the circumferential section S. More specifically, an end portion 120 a of the sipe 120 communicating with the circumferential direction narrow groove 62 is positioned between the circumferential direction end 320 a and the circumferential direction end 320 b.

In this embodiment, the entire sipe 120 is positioned within the circumferential section S, but the end portion 120 a may be positioned within the circumferential section S, and the entire sipe 120 may not necessarily be positioned within the circumferential section S.

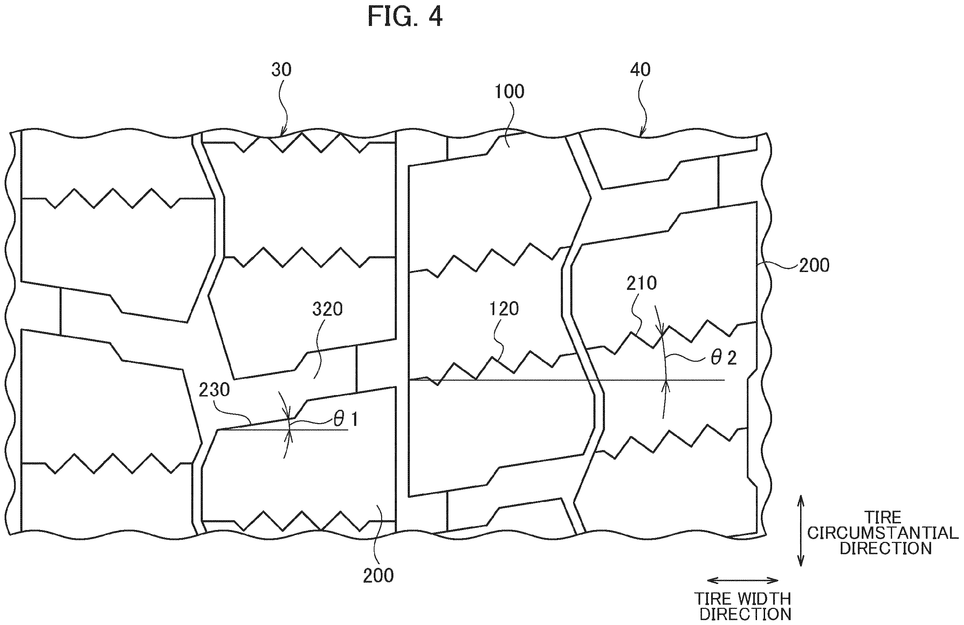

FIG. 4 is a partially enlarged plan view of the block row 30 and the block row 40 including the extension angles θ1 and θ2.

As shown in FIG. 4, the width direction groove portion 320 is formed on the block row 40 side adjacent to the block row 30. The width direction groove portion 320 extends in the tire width direction as described above. Specifically, the width direction groove portion 320 is not parallel to the tire width direction but has an extension angle θ1. The extending angle θ1 is an angle formed by the extending direction of the width direction groove portion 320 and the tire width direction. The extending direction of the width direction groove portion 320 may be based on the extending direction of a groove wall 230 of the land block 200 of the block row 30.

The sipe 120 of the land block 100 of the block row 40 and the sipe 210 of the land block 200 of the block row 40 also extend in the tire width direction, but are not parallel to the tire width direction and have an extension angle θ2.

The extension angles θ1 and θ2 are preferably about 5 ~ 15 °. In this embodiment, the extending direction of the sipes 120 of the land block 100 of the block row 40 and the sipes 210 of the land block 200 of the block row 40 coincide with the extending direction of the width direction groove portion 320 of the block row 30. Here, the coincident extension directions may mean that the difference between the extension angle θ1 and the extension angle θ2 is 10 degrees or less.

### (4) Shape of the width direction groove 300

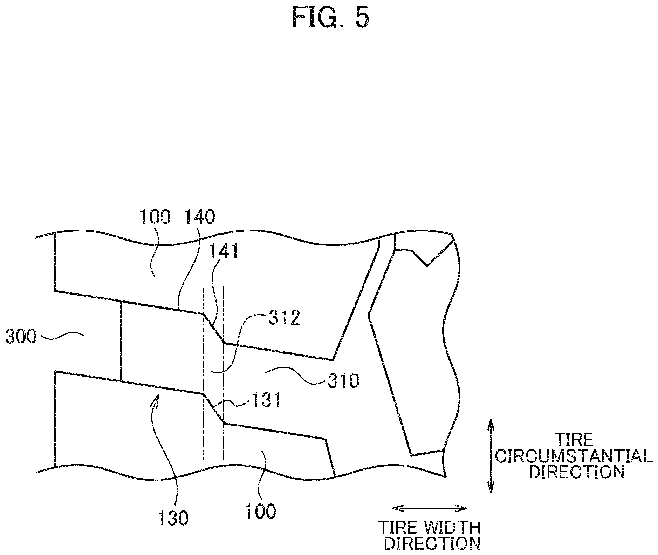

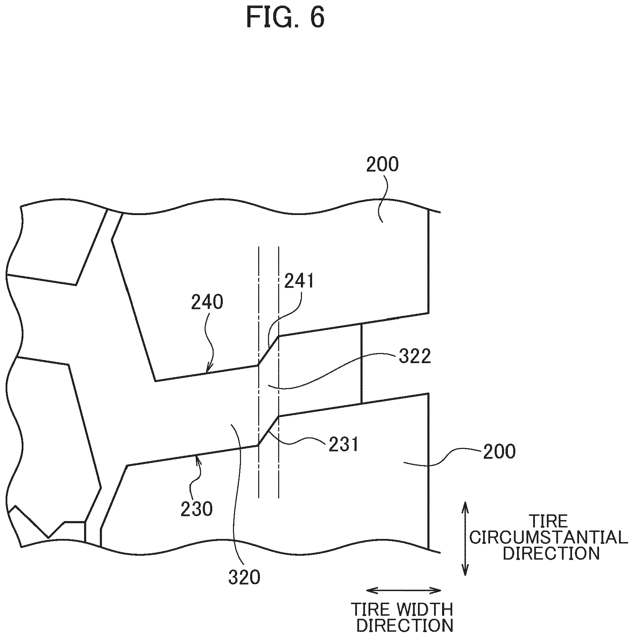

FIG. 5 is a partially enlarged plan view of the width direction groove portion 310 side forming the width direction groove 300. FIG. 6 is a partially enlarged plan view of the width direction groove portion 320 side forming the width direction groove 300.

As shown in FIG. 5, the width direction groove portion 310 has a zigzag section 312 zigzagged in the tire circumferential direction while extending in the tire width direction.

The width direction groove 310 is formed of a groove wall 130 of the land block 100 and a groove wall 140 of the land block 100 adjacent to the land block 100 on the groove wall 130 side in the tire circumferential direction. The groove wall 130 includes an inclined groove wall 131 forming the zigzag section 312. The groove wall 140 includes an inclined groove wall 141 forming the zigzag section 312. The inclined groove wall 131 and the inclined groove wall 141 are formed to face each other.

In this embodiment, the length and position of the inclined groove wall 131 (first inclined groove wall) in the tire width direction coincides with the length and position of the inclined groove wall 141 (second inclined groove wall) in the tire width direction. In other words, outside end in the tire width direction of the inclined groove wall 131 and outside end in the tire width direction of the inclined groove wall 141 overlap each other in the tire circumferential direction. Similarly, inside end in the tire width direction of the inclined groove wall 131 and inside end in the tire width direction of the inclined groove wall 141 overlap each other in the tire circumferential direction.

As shown in FIG. 6, the width direction groove portion 320 has a zigzag section 322 zigzagged in the tire circumferential direction while extending in the tire width direction.

The width direction groove 320 is formed of a groove wall 230 of the land block 200 and a groove wall 240 of the land block 200 adjacent to the land block 200 on the groove wall 230 side in the tire circumferential direction.

Similarly to the width direction groove portion 310 described above, in the present embodiment, the length and position of the inclined groove wall 231 (first inclined groove wall) in the tire width direction coincides with the length and position of the inclined groove wall 241 (second inclined groove wall) in the tire width direction. In other words, outside end in the tire width direction of the inclined groove wall 231 and outside end in the tire width direction of the inclined groove wall 241 overlap each other in the tire circumferential direction. Similarly, inside end in the tire width direction of the inclined groove wall 231 and inside end in the tire width direction of the inclined groove wall 241 overlap each other in the tire circumferential direction.

### (5) Function and effects

According to the embodiment described above, the following effects are obtained. Specifically, the central land region CT1 is provided with the block row 30 delimited by circumferential direction narrow grooves 61, 62 having a groove width narrower than that of the circumferential direction main grooves 71, 72. The width direction groove 300 includes width direction groove portions 310, 320 and bent portions 330, 340, and the groove width of the bent portions 330, 340 along the tire width direction is a wedge shape which becomes narrower as it advances along the tire circumferential direction.

Since the land blocks 100 and 200 of the block row 30 delimited by the circumferential direction narrow grooves 61 and 62 and the land blocks of the block row 40 (and the block row 50) adjacent to the block row 30 are provided close to each other in the tire width direction, they are in a state of supporting each other, and deformation (movement) especially in the tire width direction is suppressed. Therefore, uneven wear of the land block can be suppressed. Further, since a tie bar or the like is not provided, sufficient edge pressure at the peripheral direction end of the land block tire can be secured.

Further, since the width direction grooves 300 are formed between the land blocks and the groove widths of the bent portions 330, 340 are wedge-shaped which become narrower as they advance along the tire circumferential direction, the snow pillar sharing force by the bent portions 330, 340 can be increased while securing the volume of snow entering the width direction grooves 300.

Specifically, since the bent portions 330 and 340 are wedge-shaped, the snow entering the bent portions 330 and 340 can be efficiently pressed and solidified while the penetration of the snow into the bent portions 330 and 340 is promoted, and the snow pillar sharing force is improved. Thus, the on-snow performance is improved.

That is, according to the pneumatic tire 10, the on-snow performance and wear resistance can be made compatible at a higher level by the tread pattern.

In the present embodiment, the bent portions 330 and 340 are formed in the central portion of the block row 30 in the tire width direction. Therefore, the snow pillar sharing force can be further effectively improved by utilizing the region where the ground pressure is highest. Thus, the on-snow performance is further improved.

In this embodiment, the sipe 120 formed in the land block 100 of the block row 40 is positioned between the circumferential direction end 320 a and the circumferential direction end 320 b, specifically within the circumferential section S. Therefore, when the pneumatic tire 10 rolls on the road surface, the contact timings of the bent portions 330, 340 of the width direction groove 300 and the sipe 120 are almost identical, so that both edge effects can be exhibited at the same time, and the on-snow performance is improved.

In this embodiment, the extending direction of the sipe 120 of the land block 100 of the block row 40 and the sipe 210 of the land block 200 of the block row 40 coincide with the extending direction of the width direction groove portion 320 of the block row 30. Therefore, when the pneumatic tire 10 rolls on the road surface, the sipe formed in the land block and the width direction groove portion 320 of the width direction groove 300 come into contact with each other at the same time, and the sipe and the extension direction of the width direction groove portion 320 coincide with each other, so that the edge effect can be effectively exhibited and on-snow performance can be improved.

In this embodiment, the length and position of the inclined groove wall 131 (inclined groove wall 231) in the tire width direction coincides with the length and position of the inclined groove wall 141 (inclined groove wall 241) in the tire width direction. For this reason, since the length and position of the inclined groove wall in the tire width direction coincide with each other while further increasing the snow pillar sharing force by the zigzag section 312 (zigzag section 322), the snow hardened by entering into the width direction groove 300 is easily discharged. Thus, the on-snow performance is further improved.

In this embodiment, the width direction groove 300 is formed in the tread central region CT2. Therefore, the snow pillar sharing force and edge pressure by the width direction groove 300 can be more effectively improved by utilizing the region where the ground pressure is highest. Thus, the on-snow performance is further improved.

### (6) Other embodiments

Although the contents of the present invention have been described in accordance with the embodiments described above, it is obvious to those skilled in the art that the present invention is not limited to these descriptions but only by the appended claims.

For example, in the above-described embodiment, the bent portion 330 and the bent portion 340 of the width direction groove 300 are described as being wedge-shaped (V-shaped), but the shapes of the bent portion 330 and the bent portion 340 may not necessarily be wedge-shaped. Specifically, as long as the groove width of the bent portion along the tire width direction becomes narrower as it advances along the tire circumferential direction, it may be, for example, tapered or dome-shaped, or may be shaped such that the groove width decreases stepwise.

In the above-described embodiment, the positions of the bent portion 330 and the bent portion 340 in the tire width direction are generally the same, but the positions of the bent portion 330 and the bent portion 340 in the tire width direction may be offset in the tire width direction.

The bent portion may be formed only on one side in the tire circumferential direction. Further, although the block row 30 is substantially provided with two sub-block rows (block row of land block 100 and block row of land block 200), for example, the block row 30 (and/or other block rows) may be provided with one block row without forming the inter-block narrow grooves 400.

The bent portion may not necessarily be formed at the center portion of the block row 30 in the tire width direction, and the length of the width direction groove portion 310 or the width direction groove portion 320 communicating with the bent portion may be different depending on the position of the bent portion.

The rotation direction of the pneumatic tire 10 when mounted on the vehicle may be designated.

As noted above, although embodiments of the present invention have been described, it should not be understood that the arguments and drawings forming part of this disclosure are intended to limit the present invention but only the appended claims.

### [Explanation of Reference Numerals]

Γ00791
10 pneumatic tires
20 tread
30, 40, 50 block row
61, 62 circumferential direction narrow groove
71, 72 circumferential direction main groove
100 land block
110, 120 sipe
120 a end portion
130 groove wall
131 inclined groove wall
140 groove wall
141 inclined groove wall
200 land block
210, 220 sipe
230 groove wall
231 inclined groove wall
240 groove wall
241 inclined groove wall
300 width direction groove
310 width direction groove portion
311 stepped section
312 zigzag section
320 width direction groove portion
320 a, 320 b circumferential direction end
321 stepped section
322 zigzag section
330, 340 bent portion
400 inter-block narrow groove
CT1 central land region
CT2 tread central region

## Claims

1. A tire (10) comprising:
a central land region (CT1) delimited by a pair of circumferential direction main grooves (71, 72) extending in a tire circumferential direction;
the central land region (CT1) is provided with a block row (30) delimited by one or a plurality of circumferential direction narrow grooves (61, 62) having a groove width narrower than the circumferential direction main groove (71, 72) and extending in the tire circumferential direction;
the block row (30) has a plurality of land blocks (100, 200) delimited by width direction grooves (300) extending in a tire width direction, wherein
the width direction groove (300) includes:
a width direction groove portion (310, 320); and
at least one bent portion (330, 340) which is continuous to the width direction groove portion (310, 320) and is bent in the tire circumferential direction, wherein
a groove width of the bent portion (330, 340) along the tire width direction becomes narrower as the bent portion (330, 340) advances along the tire circumferential direction,
an adjacent block row (40) adjacent to the block row (30) in the tire width direction across the circumferential direction narrow groove (62) has an adjacent land block (100) in which a sipe (120) extending in the tire width direction is formed; and
the sipe (120) is positioned between one end (320a) of the width direction groove portion (320) in the tire circumferential direction and another end (320b) of the width direction groove portion (320) in the tire circumferential direction.

2. The tire (10) according to claim 1, wherein the bent portion (330, 340) is formed in a central portion of the block row (30) in the tire width direction.

3. The tire (10) according to claim 1, wherein
the width direction groove portion (320) is formed at least on the adjacent block row (40) side, and
a difference between an extension angle (θ2) of the sipe (120) and an extension angle (θ1) of the width direction groove portion (320) is 10 degrees or less.

4. The tire (10) according to claim 1, wherein
the width direction groove portion (310, 320) has a zigzag section (312) zigzagged in the tire circumferential direction while extending in the tire width direction; and
a length and position of a first inclined groove wall (131, 231) constituting the zigzag section (312) in the tire width direction coincide with a length and position of a second inclined groove wall (141, 241) constituting the zigzag section (312) in the tire width direction.

5. The tire (10) according to claim 1, wherein the bent portion (330, 340) is V-shaped.

6. The tire (10) according to claim 1, wherein the width direction groove (300) is formed in a tread central region (CT2) including a tire equatorial line.

## Patentansprüche

1. Reifen (10), umfassend:
einen mittleren Stegbereich (CT1), der durch ein Paar in Umfangsrichtung verlaufende Hauptrillen (71, 72) begrenzt ist, die sich in einer Reifenumfangsrichtung erstrecken;
wobei der mittlere Stegbereich (CT1) mit einer Blockreihe (30) versehen ist, die durch eine oder eine Vielzahl von in Umfangsrichtung verlaufenden schmalen Rillen (61, 62) begrenzt ist, die eine Rillenbreite aufweisen, die schmaler als die der in Umfangsrichtung verlaufenden Hauptrille (71, 72) ist, und sich in der Reifenumfangsrichtung erstrecken;
wobei die Blockreihe (30) eine Vielzahl von Stegblöcken (100, 200) aufweist, die durch Breitenrichtungsrillen (300) begrenzt sind, die sich in einer Reifenbreitenrichtung erstrecken, wobei
die Breitenrichtungsrille (300) einschließt:
einen in Breitenrichtung verlaufenden Rillenabschnitt (310, 320); und
mindestens einen gebogenen Abschnitt (330, 340), der an den in Breitenrichtung verlaufenden Rillenabschnitt (310, 320) anschließt und in der Reifenumfangsrichtung gebogen ist, wobei:
eine Rillenbreite des gebogenen Abschnitts (330, 340) entlang der Reifenbreitenrichtung schmaler wird, während der gebogene Abschnitt (330, 340) entlang der Reifenumfangsrichtung vorrückt;
eine angrenzende Blockreihe (40), die in der Reifenbreitenrichtung über die in Umfangsrichtung verlaufende schmale Rille (62) an die Blockreihe (30) angrenzt, einen angrenzenden Stegblock (100) aufweist, wobei eine Lamelle (120) ausgebildet ist, die sich in der Reifenbreitenrichtung erstreckt; und
die Lamelle (120) zwischen einem Ende (320a) des in Breitenrichtung verlaufenden Rillenabschnitts (320) in der Reifenumfangsrichtung und einem anderen Ende (320b) des in Breitenrichtung verlaufenden Rillenabschnitts (320) in der Reifenumfangsrichtung angeordnet ist.

2. Reifen (10) nach Anspruch 1, wobei der gebogene Abschnitt (330, 340) in einem mittleren Abschnitt der Blockreihe (30) in der Reifenbreitenrichtung ausgebildet ist.

3. Reifen (10) nach Anspruch 1, wobei:
der in Breitenrichtung verlaufende Rillenabschnitt (320) mindestens auf der Seite der angrenzenden Blockreihe (40) ausgebildet ist, und
eine Differenz zwischen einem Erstreckungswinkel (θ2) der Lamelle (120) und einem Erstreckungswinkel (θ1) des in Breitenrichtung verlaufenden Rillenabschnitts (320) 10 Grad oder weniger beträgt.

4. Reifen (10) nach Anspruch 1, wobei:
der in Breitenrichtung verlaufende Rillenabschnitt (310, 320) einen Zickzackabschnitt (312) aufweist, der in der Reifenumfangsrichtung zickzackförmig ist, während er sich in der Reifenbreitenrichtung erstreckt; und
eine Länge und Position einer ersten schrägen Rillenwand (131, 231), die den Zickzackabschnitt (312) in der Reifenbreitenrichtung bildet, mit einer Länge und Position einer zweiten schrägen Rillenwand (141, 241) übereinstimmen, die den Zickzackabschnitt (312) in der Reifenbreitenrichtung bildet.

5. Reifen (10) nach Anspruch 1, wobei der gebogene Abschnitt (330, 340) V-förmig ist.

6. Reifen (10) nach Anspruch 1, wobei die Breitenrichtungsrille (300) in einem Laufflächenmittenbereich (CT2) der ausgebildet ist, der eine Reifenäquatoriallinie einschließt.

## Revendications

1. Pneumatique (10), comprenant :
une région d'appui centrale (CT1) délimitée par une paire de rainures principales dans la direction circonférentielle (71,72) s'étendant dans une direction circonférentielle du pneumatique ;
la région d'appui centrale (CT1) étant dotée d'une rangée de pavés (30) délimitée par une ou une pluralité de rainures étroites dans la direction circonférentielle (61, 62) ayant une largeur de rainure plus étroite que celle de la rainure principale dans la direction circonférentielle (71, 72) et s'étendant dans la direction circonférentielle du pneumatique ;
la rangée de pavés (30) comportant une pluralité de pavés d'appui (100, 200) délimités par des rainures dans la direction de la largeur (300) s'étendant dans une direction de la largeur du pneumatique ; dans lequel
la rainure dans la direction de la largeur (300) inclut :
une partie de rainure dans la direction de la largeur (310, 320) ; et
au moins une partie fléchie (330, 340) qui est continue par rapport à la partie de rainure dans la direction de la largeur (310, 320) et est fléchie dans la direction circonférentielle du pneumatique ; dans lequel :
une largeur de rainure de la partie fléchie (330, 340), le long de la direction de la largeur du pneumatique, rétrécit au fur et à mesure que la partie fléchie (330, 340) avance le long de la direction circonférentielle du pneumatique ;
une rangée de pavés adjacente (40), adjacente à la rangée de pavés (30) dans la direction de la largeur du pneumatique à travers la rainure étroite dans la direction circonférentielle (62), comporte un pavé d'appui adjacent (100) dans lequel est formée une lamelle (120) s'étendant dans la direction de la largeur du pneumatique ; et
la lamelle (120) est positionnée entre une extrémité (320a) de la partie de rainure dans la direction de la largeur (320), dans la direction circonférentielle du pneumatique, et une autre extrémité (320b) de la partie de rainure dans la direction de la largeur (320), dans la direction circonférentielle du pneumatique.

2. Pneumatique (10) selon la revendication 1, dans lequel la partie fléchie (330, 340) est formée dans une partie centrale de la rangée de pavés (30), dans la direction de la largeur du pneumatique.

3. Pneumatique (10) selon la revendication 1, dans lequel :
la partie de rainure dans la direction de la largeur (320) est formée au moins sur le côté de la rangée de pavés adjacente (40), et
une différence entre un angle d'extension (θ2) de la lamelle (120) et un angle d'extension (θ1) de la partie de rainure dans la direction de la largeur (320) correspond à 10 degrés ou moins.

4. Pneumatique (10) selon la revendication 1, dans lequel :
la partie de rainure dans la direction de la largeur (310, 320) comporte une section en zigzag (312) s'étendant en zigzag dans la direction circonférentielle du pneumatique tout en s'étendant dans la direction de la largeur du pneumatique ; et
une longueur et une position d'une première paroi de rainure inclinée (131, 231), constituant la section en zigzag (312) dans la direction de la largeur du pneumatique, coïncident avec une longueur et une position d'une deuxième paroi de rainure inclinée (141, 241) constituant la section en zigzag (312) dans la direction de la largeur du pneumatique.

5. Pneumatique (10) selon la revendication 1, dans lequel la partie fléchie (330, 340) est en forme de V.

6. Pneumatique (10) selon la revendication 1, dans lequel la rainure dans la direction de la largeur (300) est formée dans une région centrale de bande de roulement (CT2) incluant une ligne équatoriale du pneumatique.
